# FASCICULE DE BREVET EUROPEEN

(11) **EP 1 470 965 B1**
(45) Date de publication et mention de la délivrance du brevet: **12.07.2006**
(21) Numéro de dépôt: 04300101.5
(22) Date de dépôt: 27.02.2004
(51) Int. Cl.: B60R 16/02

(54) **Procédé de recherche automatique des chemins de protection dans un câblage électrique**
Automatisches Suchverfahren für Schutzpfade in einem Kabelbaum
Automatic search method for protection paths in a wire harness

(30) Priorité: 28.03.2003 FR 0303871
(43) Date de publication de la demande: 27.10.2004
(73) Titulaire: Renault s.a.s., 92100 Boulogne Billancourt (FR)
(72) Inventeur: Gaillard, Jérôme, 75015 Paris (FR); Tonnerieux, François, 92160 Antony (FR)
(74) Mandataire: Davies, Owen Robert Treharne

(56) Documents cités:
- WO-A-02/059801
- DE-A- 19 935 422
- US-A1- 2002 010 901

## Description

La présente invention concerne la recherche automatique des chemins de protection électrique dans un câblage électrique, notamment pour véhicule automobile. Le document WO 2 059 801 décrit un tel procédé comme divulger dans le préambule de la revendication 1.

En raison du nombre croissant de fonctionnalités électriques installées dans les véhicules automobiles, le câblage électrique est un système de plus en plus complexe, volumineux et cher. Sa conception fait appel actuellement à des outils de CAO - Conception Assistée par Ordinateur - et à des outils de simulation. Cependant, le dimensionnement automatique d'un schéma électrique requiert trois étapes nécessaires :
- le dimensionnement en régime nominal des calibres des fusibles et des sections des fils électriques ;
- le dimensionnement des fils en court-circuit de charge ;
- le respect de la chute de tension entre la batterie d'alimentation et l'organe consommateur d'énergie.

La deuxième étape permet de déterminer à chaque fil la section nécessaire et suffisante pour que le fusible soit détruit avant le fil qu'il protège lorsque les organes consommateurs sont placés en mode dégradé, c'est-à-dire en court-circuit.

Pour cela, il faut connaître les liaisons entre les composants du schéma électrique afin de déterminer, pour une situation donnée, les composants qui sont activés, les fils qui sont sollicités et les protections électriques qu'il est nécessaire de prévoir. Actuellement, les méthodes de dimensionnement utilisent des abaques et un calcul manuel non automatisé, et la recherche des protections électriques se fait à partir de schémas électriques et d'architecture de câblage.

Ainsi, dans le cadre du développement d'une méthode de dimensionnement automatique des câblages électriques, il apparaît nécessaire de trouver automatiquement les liaisons entre les différents composants d'un périmètre électrique, qui répondent aux questions suivantes :
- quel fusible protège quels fils et pour chaque fil, quels fusibles le protègent ,
- pour chaque charge ou composant consommateur d'énergie, quels fusibles électriques l'alimentent.

Le but de l'invention est de trouver automatiquement les chemins et les protections électriques à partir de la description des différents éléments du périmètre électrique, se présentant sous la forme d'une part d'une nomenclature du câblage, autrement appelée « netlist », comprenant la liste des appareils, des fils qui les relient, des connecteurs, des épissures et des masses, d'autre part des modèles descriptifs des appareils électriques et enfin des modèles des composants élémentaires de chaque appareil.

Pour cela, l'objet de l'invention est un procédé de recherche automatique des chemins de protection dans un câblage de circuit électrique comprenant un réseau de fils reliant des appareils à une source d'alimentation ou à la masse, et protégés par des fusibles, caractérisé en ce qu'à partir premièrement d'une nomenclature du câblage dans laquelle sont répertoriés les appareils, les fils, les connecteurs assurant la liaison entre au moins un fil et un appareil, les épissures et les masses, et deuxièmement des modèles descriptifs de tous les appareils du circuit, il comporte quatre phases successives :
- lecture de la nomenclature du câblage et des modèles descriptifs des appareils ;
- recherche des chemins électriques partant des appareils contenant une charge et aboutissant aux masses ;
- recherche des chemins électriques partant de la source d'alimentation vers les appareils appareils contenant une charge :

- reconstitution des lignes de courant entre la source d'alimentation et la masse et détermination des chemins de protection électrique du circuit.

Selon une autre caractéristique du procédé, la détermination des chemins de protection électrique du circuit consiste à établir les six fichiers suivants :
- liste des charges du périmètre électrique du circuit ;
- liste des fils protégés ;
- liste des fusibles ;
- liste des liaisons entre les fusibles et les fils qu'ils protègent ;
- liste des liaisons entre les fils et les fusibles qui les protègent ;
- mise en forme de la liste des fusibles.

L'invention fourni aussi un article de commerce comportant une mémoire lisible par un ordinateur, un programme exécutable par un ordinateur étant enregistré sur ladite mémoire pour la recherche automatique des chemins de protection dans un câblage de circuit électrique comprenant un réseau de fils reliant des appareils à une source d'alimentation ou à la masse, et protégés par des fusibles, caractérisé en ce qu'à partir premièrement d'une nomenclature du câblage dans laquelle sont répertoriés les appareils (Aᵢ), les fils (Fᵢ). les connecteurs assurant la liaison entre au moins un fil et un appareil, les épissures et les masses, et deuxièmement des modèles descriptifs de tous les appareils du circuit, caractérisé en ce que le programme inclut un codage pour quatre phases successives :
- lecture de la nomenclature et des modèles descriptifs des appareils ;
- recherche des chemins électriques partant des appareils contenant une charge et aboutissant aux masses ;
- recherche des chemins électriques partant de l'alimentation vers les appareils contenant une charge ;
- reconstitution des lignes de courant entre la source d'alimentation et la masse et détermination des chemins de protection électrique du circuit:
   L'invention fourni aussi un outil informatique programmé à la conception et/ou à l'automatisation des étapes du procédé selon l'invention ou programmé en utilisant un article de commerce selon l'invention.

D'autres caractéristiques et avantages de l'invention apparaîtront à la lecture de la description du procédé illustré par les figures suivantes qui sont :

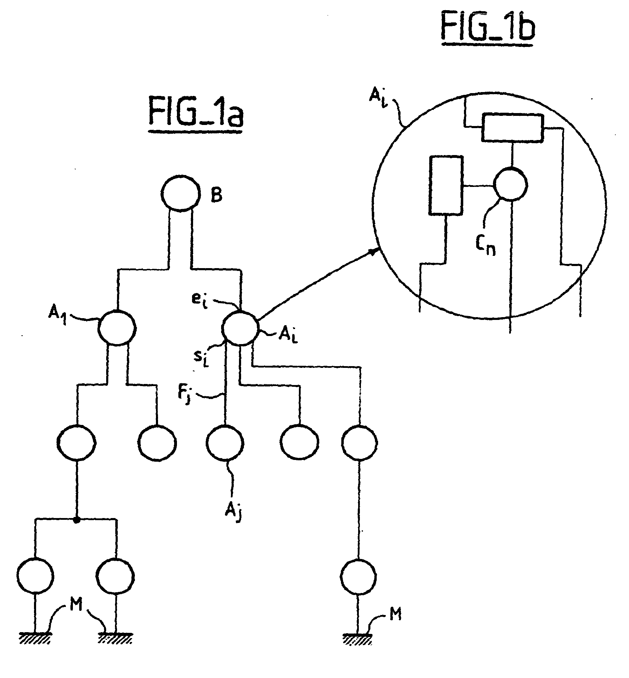

- la figure 1ₐ : un schéma descriptif d'un circuit électrique, composé d'appareils électriques ;
- la figure 1_{b}: un schéma descriptif d'un circuit électrique, composé d'un appareil électrique constitué de composants élémentaires ;
- la figure 2 : une représentation schématique du procédé selon l'invention ;
- la figure 3: l'organigramme de la phase de recherche des chemins électriques depuis les appareils jusqu'aux masses ;
- la figure 4 : l'organigramme de la phase de recherche des chemins depuis la source d'alimentation jusqu'aux organes consommateurs d'énergie.

Un circuit électrique peut être assimilé à un réseau d'appareils électriques A₁, ... Aᵢ, ..., Aₙ reliés entre eux, ainsi qu'à la batterie B ou la masse M par des fils F₁, ... Fⱼ, ...Fₘ comme le montre le schéma de la figure 1ₐ. Chaque appareil Aᵢ a une ou plusieurs entrées e, et sorties s, matérialisées par des connecteurs ou « pins ». Une ligne de courant est définie comme un chemin de ce réseau qui part de l'appareil le plus en amont, c'est-à-dire la batterie d'alimentation, vers le point le plus en aval, c'est-à-dire la masse, en passant par plusieurs fils et appareils.

Comme le montre la figure 1_{b}, chaque appareil Aᵢ est lui-même un réseau de composants Cₙ électriques et/ou électroniques élémentaires, tels qu'une lampe, un interrupteur, un relais, un fusible, une diode...

Tous ces éléments du circuit électrique sont répertoriés dans une nomenclature ou « netlist », qui correspond au premier niveau de description comprenant des appareils reliés entre eux par des fils. C'est pourquoi cette "netlist" contient les listes suivantes :
- les appareils du périmètre électrique, qui comportent toujours une charge active (résistance de chauffage, moteur, lampe, fusible ...) ;
- les fils qui font le lien entre lesdits appareils ;
- les connecteurs qui assurent la liaison entre au moins un fil et un appareil ;
- les épissures qui sont des noeuds de connexion ;
- les masses.

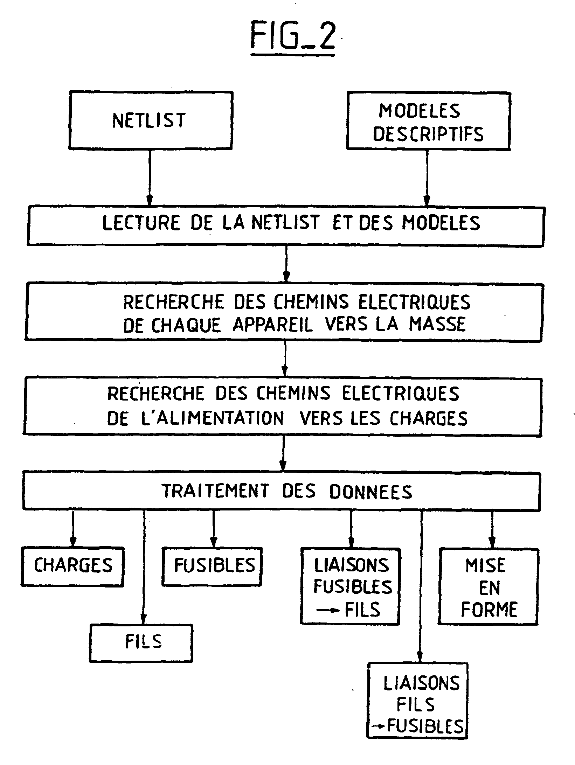

Une nomenclature ou netlist" décrit chaque appareil comme un boîtier référencé avec des connecteurs jouant le rôle d'entrées et de sorties et constitue une des deux données d'entrée du procédé de recherche automatique selon l'invention, comme le montre la représentation schématique de la figure 2. Une deuxième entrée est constituée des modèles descriptifs de tous les appareils du circuit, qui définissent un deuxième niveau de description.

Comme cela a été rappelé auparavant, un appareil étant un ensemble de composants élémentaires disposés dans un même boîtier, son modèle descriptif est un fichier texte qui contient :
- les liaisons entre ses différents composants élémentaires ;
- le nom des fiches, ou pins, d'entrée/sortie de l'appareil pour faire le lien avec la netlist, de telle sorte que le modèle descriptif de chaque appareil comporte le nom de la fiche d'entrée et de la fiche de sortie de chaque composant élémentaire.

Recevant ces deux types de données d'entrée, le procédé de recherche automatique fait l'analyse syntaxique des éléments disponibles dans ces fichiers d'entrée pour les mettre en relation, de façon à obtenir six fichiers de sortie permettant de trouver les chemins de protection électrique du circuit, mais également d'établir le dimensionnement automatique des fils et d'aider à l'interface homme-machine. Ces six fichiers sont les suivants :
- liste des charges du périmètre électrique, chaque charge étant associée à la liste des fils qui l'alimentent ;
- liste des fils du périmètre ;
- liste des fusibles ;
- liste des liaisons entre les fusibles et les fils qu'ils protègent ;
- liste des liaisons entre les fils et les fusibles qui les protègent ;
- mise en forme de la liste des fusibles et des fils qu'ils protègent ;

Pour obtenir ces fichiers de sortie, le procédé de recherche comporte quatre phases successives, dont la première est la lecture de la "netlist" et des modèles descriptifs des appareils du périmètre électrique selon des règles nécessaires pour identifier et différencier les différents composants électriques. Cette phase de lecture permet d'obtenir les informations nécessaires à la recherche des chemins électriques dans un format de données d'entrée. Pour chaque type de composants, certaines propriétés sont de plus identifiées, comme les noms des fiches d'entrée/sortie par exemple.

La deuxième phase du procédé est la recherche des chemins électriques partant des appareils et aboutissant aux masses. Pour chaque composant consommateur d'énergie électrique, la phase recherche de composant en composant, grâce aux fiches d'entrée/sortie, tous les chemins électriques possibles vers la masse, qui sont donc des lignes d'alimentation sans notion de protection.

La recherche démarre d'un appareil, on cherche sa fiche de sortie puis le fil traversé jusqu'à une fiche d'entrée d'un autre composant et cela jusqu'à aboutir à une masse, identifiée selon le format de description des composants du circuit. A chaque nouveau point du circuit, le chemin suivi est qualifié de correct ou d'impossible selon certaines règles à respecter. Ainsi, le chemin ne passe pas deux fois par le même fil pour éviter les boucles fermées, il ne passe pas non plus par un fusible car il remonterait vers l'alimentation alors qu'on va vers la masse.

Certains composants sont parcourus dans un sens précis, de leur fiche d'entrée vers leur fiche de sortie et un chemin qui les traverserait dans le sens inverse ne serait pas retenu.

Si un chemin débouche sur une impossibilité, le procédé revient au précédent point de séparation entre plusieurs branches du périmètre électrique et l'analyse reprend dans une nouvelle direction.

A chaque point d'avancement de la recherche, le fil traversé est mémorisé dans une structure permettant d'organiser les données et, en fin de recherche, tous les fils traversés constituant ainsi le chemin électrique sont mémorisés et organisés par ordre d'apparition entre l'appareil consommateur et la masse.

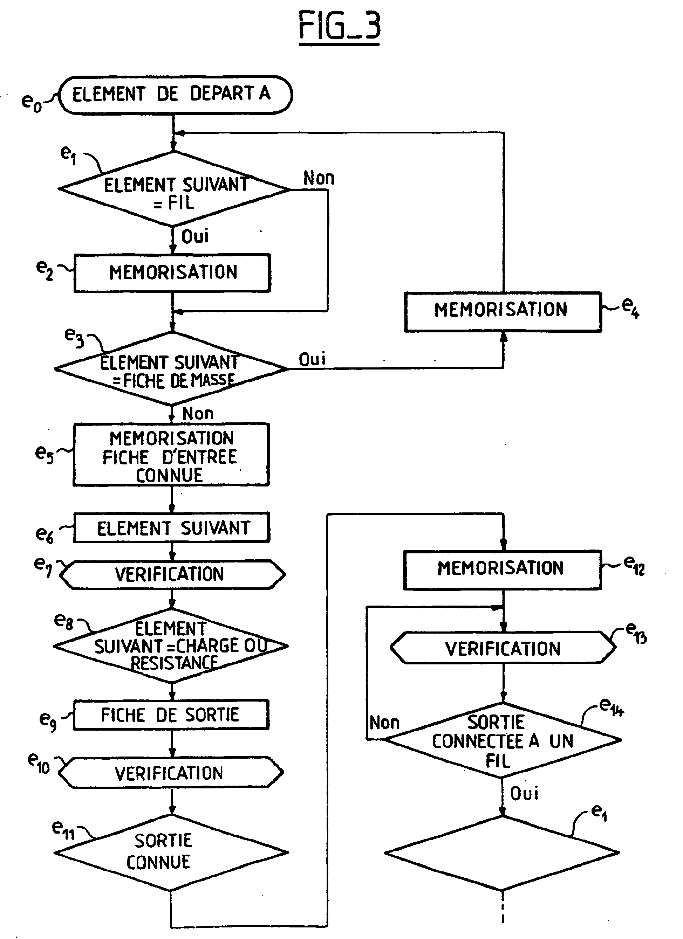

L'organigramme de la figure 3 est un exemple de phase de recherche comportant les étapes suivantes :
e₀) l'élément de départ de la recherche est un appareil à charge A, dont une sortie constitue une fiche de départ ;
e₁) l'élément du circuit considéré est-il un fil ?
e₂) si l'élément est un fil, son nom est mémorisé pour constituer le chemin ;
e₃) dans le cas où l'élément n'est pas un fil, est-ce une fiche de masse ?
e₄) s'il s'agit d'une fiche de masse, le chemin trouvé depuis l'appareil de départ A est mémorisé en rapport avec ce dernier ; cette étape marque une situation de rencontre avec un point de masse et le procédé redémarre une nouvelle recherche de chemin
à l'étape e₁) avec la fiche de sortie suivante de l'appareil A ;
e₅) dans le cas où l'élément considéré à l'étape e₃) n'est pas une fiche de masse, cette fiche est mémorisée comme fiche d'entrée connue ;
e₆) le procédé recherche un élément suivant :
e₇) vérification de chaque nouvel élément ;
e₈) cet élément nouveau est-il une charge ou une résistance ? si oui, le chemin n'est pas bon ;
e₉) si non, le procédé recherche les fiches de sortie de cet élément considéré ;
e₁₀) vérification d'une fiche de sortie ;
e₁₁) pour chaque fiche de sortie vérifiée, est-elle déjà connue ? si oui, elle est ignorée, on revient à l'étape e₁₂) et on en vérifie une autre ;
e₁₂) une fiche de sortie vérifiée pour la première fois est considérée et mémorisée comme étant connue à cette étape ;
e₁₃) vérification de chaque fiche de sortie mémorisée ;
e₁₄) est-elle connectée à un fil ? si non, on en vérifie une autre ;
e₁₅) si oui, la recherche de chemin redémarre à l'étape e₁) en considérant la dernière fiche de sortie comme fiche de départ pour cette étape e₁).

La troisième phase de recherche des chemins partant de l'alimentation électrique, la batterie par exemple, vers les appareils consommateurs d'énergie électrique consiste à identifier d'une part les fusibles qui protègent les fils et d'autre part les fils d'alimentation de ces appareils.

Comme précédemment, il s'agit d'une recherche point par point, avec application des règles pour déterminer à chaque point considéré si le chemin suivi est correct et mémoriser les nouvelles données, c'est-à-dire les nouveaux fils et fusibles.

Entre une fiche d'entrée et une fiche de sortie d'un appareil, il ne peut y avoir qu'un seul fusible.

Quand un fusible est identifié, il est alors mémorisé et tous les fils rencontrés à partir de lui, jusqu'à un prochain fusible lui sont associés, car ce sont les fils protégés par ce fusible. De plus, tous les fils rencontrés entre la batterie et un appareil sont considérés comme fils d'alimentation, mais le chemin le plus court est considéré comme le meilleur et mémorisé.

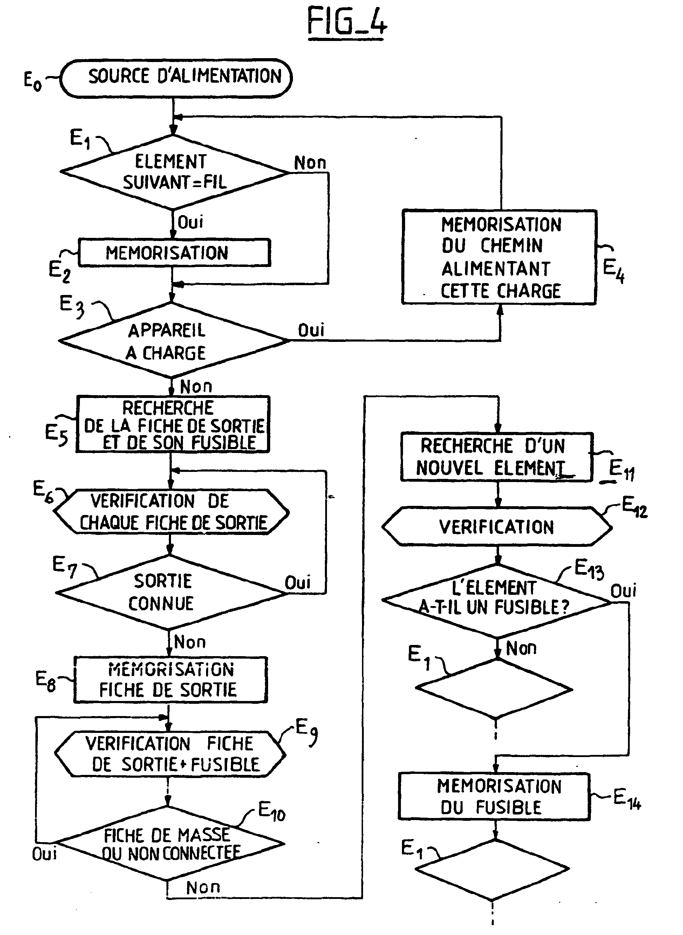

L'organigramme de la figure 4 est un exemple de phase de recherche des chemins depuis la batterie du véhicule jusqu'aux appareils consommateurs, comportant les étapes suivantes :
E₀) le point de départ de la recherche est la source d'alimentation électrique ;
E₁) l'élément suivant du circuit est-il un fil ?
E₂) si oui, son nom est mémorisé pour constituer le chemin ;
E₃) sinon, est-ce un appareil contenant une charge ?
E₄) si oui, mémorisation du chemin alimentant cette charge et retour vers l'étape E₁) avec la fiche de sortie suivante ;
E₅) si ce n'est pas un appareil contenant une charge, l'étape recherche la fiche de sortie et le fusible lié à cette fiche, que le fusible soit logé dans l'appareil ou pas;
E₆) vérification de chaque fiche de sortie ;
E₇) pour chaque fiche de sortie vérifiée, est-elle déjà connue ? si oui, vérification de la fiche de sortie suivante ;
E₈) si la fiche de sortie est vérifiée pour la première fois, elle est alors considérée et enregistrée comme connue ;
E₉) vérification d'un couple fiche de sortie-fusible ;
E₁₀) pour chaque couple vérifié, la fiche est-elle une fiche de masse ou une fiche non connectée ? Si oui, on vérifie un autre couple ;
E₁₁) si non, recherche d'autres éléments ;
E₁₂) vérification de chaque nouvel élément ;
E₁₃) l'élément contient-il un fusible ?
E₁₄) si oui, le fusible courant fait partie alors du chemin et est mémorisé, puis la recherche reprend à l'étape E₁); si non, la recherche reprend à l'étape E₁).

La quatrième phase du procédé est un traitement de toutes les données issues des deux précédentes phases de recherche dans le but de reconstituer les lignes de courant entre la batterie et la masse. Ce traitement est suivi d'une mise en forme des chemins de protection ainsi calculés, aussi bien au niveau de la forme, selon un fichier texte par exemple, qu'au niveau du fond c'est-à-dire du type de données à présenter, des associations nécessaires entre charges et fils d'alimentation, entre fusibles et fils protégés par un fusible, entre fils et fusibles protégeant ces fils.

Ainsi, ce traitement des données permet l'obtention de six fichiers de sortie, référencés par exemple de telle sorte que chaque nom de fichier est constitué du nom complet figurant dans la nomenclature ou "netlist" avec une extension indiquant son contenu.

Un premier fichier est celui des charges du périmètre électrique, qui associe à chaque appareil consommateur la liste des fils qui l'alimentent en énergie électrique. Chaque ligne de ce fichier est constituée de deux éléments :
- le nom de la charge ou appareil ;
- la liste des fils d'alimentation de cette charge.

Le nom de la charge correspond au composant physique qui consomme de l'énergie, soit une résistance, une lampe, ... et il intègre le chemin pour y arriver (nom de l'appareil contenant la charge et nom de la charge contenue dans l'appareil). Le nom des fils est celui utilisé dans la "netlist".

Grâce à ce fichier des charges, il sera possible, lors de la vérification de la chute de tension, d'intervenir sur les fils qui alimentent réellement un appareil dont la tension est trop faible.

Un deuxième fichier est celui des fils, qui contient quatre listes:
- la liste des fils du périmètre électrique, le nom de chaque fil étant le même que celui utilisé dans la "netlist":

- la liste des sections des fils ;
- la liste des longueurs des fils ;
- la liste des classes des fils.

L'association entre un fil et sa section, sa longueur et sa classe se fait par exemple en prenant l'élément de même rang dans chaque liste.

Un troisième fichier concerne les fusibles et contient deux listes :
- la liste des fusibles du périmètre électrique. Etant donné qu'un fusible est un composant interne d'un boîtier, son nom intègre celui du boîtier dans lequel il se trouve.
- la liste des calibres des fusibles, l'association entre un fusible et son calibre se faisant en prenant l'élément de même rang dans chacune des deux listes.

Un quatrième fichier regroupe les liaisons entre les fusibles et les fils qu'ils protègent. Chaque ligne du fichier est constituée du nom du fusible et de la liste des fils associés.

Un cinquième fichier regroupe les liaisons entre les fils et le ou les fusibles les protégeant. C'est donc l'inverse du quatrième fichier. Comme certains fils peuvent être protégés par plusieurs fusibles, tels que les fils de masse notamment, la vérification des protections impose de connaître tous les fusibles qui protègent un fil pour ne pas oubrier une protection.

Dans ce fichier, chaque ligne est composée du nom du fil, selon le format de la "netlist", et de la liste des fusibles le protégeant selon un format complet incluant le nom de l'appareil le contenant.

Le sixième fichier est enfin une mise en forme du quatrième fichier des liaisons entre les fusibles et les fils qu'ils protègent. Pour chaque fusible, on présente en colonne les fils protégés par ledit fusible, avec leur point de départ et leur point d'arrivée afin de faire le lien avec les schémas décrits dans l'outil de CAO utilisé. Le fichier est présenté tel quel à l'utilisateur afin de présenter les protections et de vérifier la cohérence des chemins de protection.

Ce procédé peut être mis en oeuvre à l'aide d'un outil informatique permettant l'édition des différents objets nécessaires à la conception et l'automatisation partielle des différentes étapes du procédé constitué par l'invention.

Le procédé de l'invention peut être programmé sur un article de commerce comportant une mémoire lisible par un ordinateur, par exemple un CD, DVD ou équivalent ou sur le disque dur d'un ordinateur. Un tel programme pour le procédé sera exécutable par un ordinateur, et sera enregistré sur ladite mémoire pour être exécuté par ledit ordinateur.

## Revendications

1. Procédé de recherche automatique des chemins de protection dans un câblage de circuit électrique comprenant un réseau de fils reliant des appareils à une source d'alimentation (B) ou a la masse (M), et protégés par des fusibles, **caractérisé en ce qu'**à partir premièrement d'une nomenclature du câblage dans laquelle sont répertoriés les appareils (Aᵢ), les fils (Fⱼ), les connecteurs assurant la liaison entre au moins un fil et un appareil, les épissures et les masses (M) et deuxièmement des modèles descriptifs de tous les appareils (Aᵢ) du circuit, il comporte quatre phases successives :
- lecture de la nomenclature et des modèles descriptifs des appareils (Aᵢ);
- recherche des chemins électriques partant des appareils (Aᵢ) contenant une charge et aboutissant aux masses (M):
- recherche des chemins électriques partant de l'alimentation (B) vers les appareils (Aᵢ) contenant une charge;
- reconstitution des lignes de courant entre la source d'alimentation (B) et la masse (M) et détermination des chemins de protection électrique du circuit.

2. Procédé de recherche automatique selon la revendication 1, **caractérisé en ce que** la détermination des chemins de protection électrique du circuit consiste à établir les six fichiers suivants :
- liste des charges du périmètre électrique du circuit ;
- liste des fils protégés ;
- liste des fusibles ;
- liste des liaisons entre les fils et les fusibles qui les protègent :
- mise en forme de la liste des fusibles.

3. Procédé de recherche automatique selon la revendication 1, **caractérisé en ce que** la phase de lecture de la nomenclature de câblage et des modèles descriptifs des appareils du périmètre électrique est destinée à délivrer des informations sur les différents composants électriques dans un format de données d'entrée.

4. Procédé de recherche automatique selon la revendication 1, **caractérisé en ce que** la phase de recherche des chemins électriques partant des appareils vers la masse recherche de composant en composant, grâce aux fiches d'entrée/sortie, tous les chemins électriques possibles vers la masse, un chemin ne pouvant passer deux fois par le même fil ni par un fusible, et à chaque point d'avancement de la recherche, le fil traversé est mémorisé dans une structure permettant d'organiser les données et, en fin de recherche, tous les fils traversés constituant ainsi le chemin électrique sont mémorisés et organisés par ordre d'apparition entre l'appareil consommateur et la masse.

5. Procédé de recherche automatique selon la revendication 1, **caractérisé en ce que** la phase de recherche des chemins partant de l'alimentation électrique vers les appareils consommateurs d'énergie consiste à identifier d'une part les fusibles qui protègent les fils et d'autre part les fils d'alimentation de ces appareils, en étudiant le chemin composant par composant, sachant qu'entre une fiche d'entrée et une fiche de sortie d'un appareil il n'y a qu'un seul fusible, et en mémorisant les fusibles identifiés ainsi que tous les fils qu'ils protègent.

6. Procédé de recherche automatique selon la revendication 5, **caractérisé en ce que** tous les fils rencontrés entre la source d'alimentation et un appareil étant considérés comme fils d'alimentation, le chemin retenu et mémorisé est le plus court.

7. Procédé de recherche automatique selon la revendication 2, **caractérisé en ce que** le fichier des charges du périmètre électrique considéré associe à chaque appareil contenant une charge consommant de l'énergie la liste des fils qui l'alimentent et chaque ligne de ce fichier est constituée de deux éléments :
- le nom de la charge ;
- la liste des fils d'alimentation de cette charge.

8. Procédé de recherche automatique selon la revendication 2, **caractérisé en ce que** le fichier des fils contient quatre listes :
- la liste des fils du périmètre électrique, le nom de chaque fil étant le même que celui de la nomenclature ;
- la liste des sections des fils ;
- la liste des longueurs des fils ;
- la liste des classes des fils.

9. Procédé de recherche automatique selon la revendication 2, **caractérisé en ce que** le fichier des fusibles contient deux listes :
- la liste des fusibles du périmètre électrique, le nom de chaque fusible intègrent celui du boîtier dans lequel il se trouve étant donné qu'un fusible est un composant interne d'un boîtier ;
- la liste des calibres des fusibles, l'association entre un fusible et son calibre se faisant en prenant l'élément de même rang dans chacune des deux listes.

10. Un article de commerce comportant une mémoire lisible par un ordinateur, un programme exécutable par un ordinateur étant enregistré sur ladite mémoire pour la recherche automatique des chemins de protection dans un câblage de circuit électrique comprenant un réseau de fils reliant des appareils à une source d'alimentation ou à la masse, et protégés par des fusibles, **caractérisé en ce qu'**à partir premièrement d'une nomenclature du câblage dans laquelle sont répertoriés les appareils (Aᵢ), les fils (Fⱼ), les connecteurs assurant la liaison entre au moins un fil et un appareil, les épissures et les masses, et deuxièmement des modèles descriptifs de tous les appareils du circuit, **caractérisé en ce que** le programme inclut un codage pour quatre phases successives :
- lecture de la nomenclature et des modèles descriptifs des appareils ;
- recherche des chemins électriques partant des appareils contenant une charge et aboutissant aux masses ;
- recherche des chemins électriques partant de l'alimentation vers les appareils contenant une charge ;
- reconstitution des lignes de courant entre la source d'alimentation et la masse et détermination des chemins de protection électrique du circuit:

11. Un outil informatique programmé à la conception et/ou à l'automatisation des étapes du procédé selon l'une quelconque des revendications 1 à 9 ou programmé en utilisant un article de commerce selon la revendication 10.

## Claims

1. A method of automatic searching of the protection paths in the cabling of an electric circuit comprising a network of wires connecting apparatus to a supply source (B) or to earth (M) and protected by fuses, **characterised in that** initially from a first cabling nomenclature listing the apparatus (Aᵢ), the wires (Fⱼ), the connectors providing the connection between at least one wire and one apparatus, the splices and the earths (M), and secondly from the descriptive models of all the apparatus (Aᵢ) of the circuit, it comprises four successive stages:
- reading of the nomenclature and the descriptive models of the apparatus (Aᵢ),
- searching of the electrical paths from the apparatus (Aᵢ) containing a load and leading to the earths (M),
- searching of the electrical paths from the supply (B) to the apparatus (Aᵢ) containing a load,
- reconstitution of the current lines between the supply source (B) and the earth (M) and determination of the electrical protection paths of the circuit.

2. A method of automatic searching as claimed in claim 1, **characterised in that** the determination of the electrical protection paths of the circuit consists in establishing the following five files:
- list of loads of the electrical periphery of the circuit,
- list of wires protected,
- list of fuses,
- list of connections between the wires and the fuses protecting them,
- formatting of the list of fuses.

3. An automatic searching method as claimed in claim 1, **characterised in that** the phase of reading of the cabling nomenclature and the descriptive models of the apparatus of the electrical periphery is adapted to supply information on the various electrical components in a data input format.

4. An automatic searching method as claimed in claim 1, **characterised in that** the phase of searching of the electrical paths from the apparatus to earth searches from component to component, by means of the input/output pins, all the possible electrical paths to earth, wherein a path cannot pass twice via the same wire nor via a fuse and, at each stage of advancement of the search, the wire traversed is memorised in a structure enabling the data to be organised and, at the end of the search, all the wires traversed and thus forming the electrical path are memorised and organised by order of appearance between the consumer apparatus and earth.

5. An automatic searching method as claimed in claim 1, **characterised in that** the phase of searching of the paths from the electrical supply to the energy consumer apparatus consists in identifying, on the one hand, the fuses which protect the wires and, on the other hand, the supply wires of these apparatus, while studying the path component by component, bearing in mind that there is only a single fuse between an input pin and an output pin of an apparatus, and while memorising the fuses identified and all the wires that they protect.

6. An automatic searching method as claimed in claim 5, **characterised in that** as all the wires encountered between the supply source and an apparatus are considered to be supply wires, the path adopted and memorised is the shortest.

7. An automatic searching method as claimed in claim 2, **characterised in that** the file of the loads of the electrical periphery in question associates, with each apparatus containing a load consuming energy, the list of wires which supply it and each line of this file is formed by two elements:
- the name of the load,
- the list of supply wires of this load.

8. An automatic searching method as claimed in claim 2, **characterised in that** the file of wires contains four lists:
- the list of the wires of the electrical periphery, the name of each wire being the same as that of the nomenclature,
- the list of the sections of the wires,
- the list of the lengths of the wires,
- the list of the classes of the wires.

9. An automatic searching method as claimed in claim 2, **characterised in that** the file of fuses contains two lists:
- the list of fuses of the electrical periphery, the name of each fuse integrating that of the housing in which it is disposed, given that a fuse is an internal component of a housing,
- the list of ratings of the fuses, the fuse and its rating being associated by taking the element of the same rank from each of the two lists.

10. A commercial article comprising a memory which may be read by a computer, a program which may be executed by a computer as it is recorded in this memory for the automatic searching of the protection paths in the cabling of an electrical circuit comprising a network of wires connecting apparatus to a supply source or to earth, and protected by fuses, **characterised in that** initially from a first cabling nomenclature listing the apparatus (Aᵢ), the wires (Fⱼ), the connectors providing the connection between at least one wire and one apparatus, the splices and the earths (M), and secondly from the descriptive models of all the apparatus of the circuit, **characterised in that** the program includes encoding for four successive stages:
- reading of the nomenclature and the descriptive models of the apparatus,
- searching of the electrical paths from the apparatus containing a load and leading to the earths,
- searching of the electrical paths from the supply to the apparatus containing a load,
- reconstitution of the current lines between the supply source and earth and determination of the electrical protection paths of the circuit.

11. A computer tool programmed for the design and/or automation of the stages of the method as claimed in any one of claims 1 to 9, or programmed using a commercial article as claimed in claim 10.

## Patentansprüche

1. Verfahren zur automatischen Suche von Schutzpfaden in einer Verkabelung eines elektrischen Stromkreises, aufweisend ein Netz an Drähten, welche Geräte mit einer Versorgungsquelle (B) oder mit der Masse (M) verbinden und welche durch Sicherungen geschützt sind, **dadurch gekennzeichnet, dass** es ausgehend von erstens einem Verzeichnis der Verkabelung, in welchem die Geräte (Aᵢ), die Drähte (Fⱼ), die Stecker, welche die Verbindung zwischen mindestens einem Draht und einem Gerät sicherstellen, die Spleißungen und die Massen (M) verzeichnet sind, und zweitens beschreibenden Modellen aller Geräte (Aᵢ) des Stromkreises, vier aufeinanderfolgende Phasen aufweist:
- Lesen des Verzeichnisses und der beschreibenden Modelle der Geräte (Aᵢ);
- Suche von elektrischen Pfaden, welche von den Geräten (Aᵢ) her kommen, die eine Ladung aufweisen und zu den Massen (M) führen;
- Suche von elektrischen Pfaden, welche von der Versorgung (B) her kommen in Richtung zu den Geräten (Aᵢ), die eine Ladung aufweisen;
- Wiederherstellung von Stromlinien zwischen der Versorgungsquelle (B) und der Masse (M) und Festlegung von elektrischen Schutzpfaden des Stromkreises.

2. Verfahren zur automatischen Suche nach Anspruch 1, **dadurch gekennzeichnet, dass** die Festlegung von elektrischen Schutzpfaden des Stromkreises darin besteht, die sechs nachfolgenden Dateien aufzustellen:
- Liste der Ladungen des elektrischen Umkreises des Stromkreises;
- Liste der geschützten Drähte;
- Liste der Sicherungen;
- Liste der Verbindungen zwischen den Drähten und den Sicherungen, welche sie schützen;
- Formgebung der Liste der Sicherungen.

3. Verfahren zur automatischen Suche nach Anspruch 1, **dadurch gekennzeichnet, dass** die Phase des Lesens des Verzeichnisses der Verkabelung und der beschreibenden Modelle der Geräte des elektrischen Umkreises dazu bestimmt ist, Informationen über die verschiedenen elektrischen Komponenten in einem Format von Eingangsdaten zu liefern.

4. Verfahren zur automatischen Suche nach Anspruch 1, **dadurch gekennzeichnet, dass** die Phase der Suche von elektrischen Pfaden, welche von den Geräten her kommen, in Richtung zu der Masse von Komponente zu Komponente dank der Eingangs-/Ausgangsstecker alle die elektrisch möglichen Pfade in Richtung zu der Masse sucht, wobei ein Pfad weder durch den gleichen Draht noch durch eine Sicherung zweimal gehen kann und bei jedem Fortschrittspunkt der Suche der durchquerte Draht in einer Struktur gespeichert wird, welche es erlaubt, die Daten zu organisieren, und am Ende der Suche alle die durchquerten Drähte, welche somit den elektrischen Pfad bilden, gespeichert werden und in der Reihenfolge des Auftretens zwischen dem Verbrauchsgerät und der Masse organisiert werden.

5. Verfahren zur automatischen Suche nach Anspruch 1, **dadurch gekennzeichnet, dass** die Phase der Suche von Pfaden, welche von der elektrischen Versorgung her kommen, in Richtung zu den Geräten des Verbrauchs an Energie darin besteht, einerseits die Sicherungen, welche die Drähte schützen, und andererseits die Versorgungsdrähte dieser Geräte zu identifizieren, indem man den Pfad von Komponente zu Komponente untersucht, wobei man weiß, dass es zwischen einem Eingangsstecker und einem Ausgangsstecker eines Geräts nur eine einzige Sicherung gibt, und indem man die identifizierten Sicherungen sowie alle die Drähte, welche sie schützen, speichert.

6. Verfahren zur automatischen Suche nach Anspruch 5, **dadurch gekennzeichnet, dass**, wobei alle die zwischen der Versorgungsquelle und einem Gerät angetroffenen Drähte als Versorgungsdrähte erachtet werden, der festgehaltene und gespeicherte Pfad der kürzeste ist.

7. Verfahren zur automatischen Suche nach Anspruch 2, **dadurch gekennzeichnet, dass** die Datei der Ladungen des elektrischen Umkreises, welcher als zu jedem Gerät gehörend erachtet wird, welches eine Energie verbrauchende Ladung enthält, die Liste der Drähte, welche es versorgen, und jede Zeile dieser Datei aus zwei Elementen gebildet ist:
- dem Namen der Ladung;
- der Liste der Versorgungsleitungen dieser Ladung.

8. Verfahren zur automatischen Suche nach Anspruch 2, **dadurch gekennzeichnet, dass** die Datei der Drähte vier Listen enthält:
- die Liste der Drähte des elektrischen Umkreises, den Namen jedes Drahts, welcher der gleiche wie derjenige des Verzeichnisses ist;
- die Liste der Querschnitte der Drähte;
- die Liste der Längen der Drähte;
- die Liste der Klassen der Drähte.

9. Verfahren zur automatischen Suche nach Anspruch 2, **dadurch gekennzeichnet, dass** die Datei der Sicherungen zwei Listen enthält:
- die Liste der Sicherungen des elektrischen Umkreises, den Namen jeder Sicherung einschließlich demjenigen des Gehäuses, in welchem sie sich befindet, wobei eine Sicherung eine innere Komponente eines Gehäuses ist;
- die Liste der Stärken der Sicherungen, wobei die Zugehörigkeit zwischen einer Sicherung und ihrer Stärke unter einem Nehmen des Elements des gleichen Rangs in jeder der beiden Listen erfolgt.

10. Handelsartikel, aufweisend einen durch einen Computer lesbaren Speicher, wobei ein durch einen Computer ausführbares Programm in dem Speicher für die automatische Suche von Schutzpfaden in einer Verkabelung eines elektrischen Stromkreises, welcher ein Netz von Drähten aufweist, welche die Geräte mit einer Versorgungsquelle oder mit der Masse verbinden und welche durch Sicherungen geschützt sind, gespeichert ist, **dadurch gekennzeichnet, dass** ausgehend von erstens einem Verzeichnis der Verkabelung, in welchem die Geräte (Aᵢ), die Drähte (Fⱼ), die Stecker, welche die Verbindung zwischen mindestens einem Draht und einem Gerät sicherstellen, die Spleißungen und die Massen verzeichnet sind, und zweitens beschreibenden Modellen aller Geräte des Stromkreises, **dadurch gekennzeichnet, dass** das Programm eine Codierung für vier aufeinanderfolgende Phasen umfasst:
- Lesen des Verzeichnisses und der beschreibenden Modelle der Geräte;
- Suche von elektrischen Pfaden, welche von den Geräten her kommen, die eine Ladung enthalten und zu den Massen führen;
- Suche von elektrischen Pfaden, welche von der Versorgung her kommen, in Richtung zu den Geräten, die eine Ladung aufweisen;
- Wiederherstellung von Stromlinien zwischen der Versorgungsquelle und der Masse und Festlegung von elektrischen Schutzpfaden des Stromkreises.

11. Informatikwerkzeug, welches für die Konzeption und/oder für die Automatisierung der Verfahrensschritte nach irgendeinem der Ansprüche 1 bis 9 programmiert ist oder unter Verwendung eines Handelsartikels nach Anspruch 10 programmiert ist.
